Europäisches Patentamt

European Patent Office

Office européen des brevets

(11) Publication number: **0 411 842 A2**

# EUROPEAN PATENT APPLICATION

(21) Application number: 90308271.7

(51) Int. Cl.5: **B60N 2/08**

(22) Date of filing: 27.07.90

(30) Priority: 02.08.89 GB 8917633

(43) Date of publication of application:
06.02.91 Bulletin 91/06

(84) Designated Contracting States:
DE ES FR GB IT SE

(71) Applicant: **Dunlop Cox Ltd**
**Glaisdale Parkway**
**Nottingham NG8 4GB(GB)**

(72) Inventor: **Babbs, Frederick William**
**Mountfield, 102A Cropwell Raod**
**Radcliffe-on-Trent, Nottingham(GB)**

(74) Representative: **Treves, Barry William et al**
**BTR Group Patent & Trade Mark Service P.O.**
**Box 504504**
**Erdington Birmingham B24 9QH(GB)**

(54) Vehicle seat slide mechanism.

(57) A vehicle seat slide mechanism comprising at least one slide pair of a fixed slide member securable to the vehicle floor and a movable slide member carrying the seat. The fixed slide member has a plurality of apertures or notches engageable by the teeth of a trigger member mounted on the movable slide. The trigger member is actuated by and de- coupled from a release member also carried by the movable slide, so that, in the event of the teeth not engaging the apertures or notches and the vehicle being in a collision, the seat does not move fully forwards or backwards, but is prevented from doing so by the teeth quickly engaging the apertures or notches.

FIGURE 1

## VEHICLE SEAT SLIDE MECHANISM

The invention relates to a vehicle seat slide mechanism and is concerned with so-called vehicle seat slide pairs.

Vehicle seat slide mechanisms, such as are provided for the fore-and-aft adjustment of the seats of a motor car or other types of vehicle, comprise a first slide member arranged to be fixed to the floor of the vehicle and a second slide member arranged to be attached to the body of the vehicle seat and slidably retained with respect to the first slide member. The combination of such a first and second slide member is referred to as a vehicle seat slide pair and it is usual to provide two such pairs, one pair on each side of the seat to make a vehicle seat slide mechanism.

In order to retain undesired fore-and-aft movement of a vehicle seat it is usual to provide a plurality of apertures or notches in the fixed slide member, which are selectively engaged by a trigger or locking member connected to the movable slide member. The trigger member normally engages in one or more of the apertures and positively prevents relative sliding movement. A release handle connected to the trigger members of a sliding mechanism may be actuated to withdraw the trigger members from their respective apertures in the slide pairs to permit sliding movement of the vehicle seat whereafter the trigger members are reengaged with different apertures.

A vehicle seat slide mechanism with such a locking device is described in European Patent Publication No 0197638. The construction disclosed in Figure 8 of this publication includes an L-shaped trigger member pivotally connected at a point intermediate the ends of the stem of the L to the movable slide member. The free end of the foot of the L is bifurcated to form two teeth which normally engage in two apertures of a series of apertures formed along the base of the fixed slide member. The free end of the stem of the L is pivotally engaged by the end of a respective limb of a generally U-shaped actuating handle which is pivotally connected to the movable slide members at points adjacent its engagement with the trigger members. If the free portion of the actuating handle is lifted the bifurcated ends of the trigger members disengage from the apertures and the seat is free to slide. When the handle is released the trigger members are urged back towards the engaged position by return springs.

When the trigger members are permitted to return towards the engaged position they may immediately engage apertures in the fixed slide member. However, it is commonly the case that the seat is moved to a position between apertures in the fixed slide members and in this event the locking teeth are urged into contact with material between adjacent pairs of apertures in the fixed slide member. Subsequent movement of the user normally results in slight fore or aft movement of the seat which in turn normally results in the teeth engaging in locking apertures under the action of the return springs. However, if the vehicle should be involved in a head-on collision before such re-engagement of the locking teeth has occurred it has been observed that the seat may be propelled forwardly so rapidly that re-engagement of the locking teeth does not occur at all. This results in the seat travelling forward a substantial distance and the seat belt, which is frequently anchored to the movable slide member, thus being unable to perform its intended function.

It is therefore an object of the present invention to provide a vehicle seat slide pair and a vehicle slide mechanism which is so constructed that even if the seat is placed in a position in which the trigger members are not engaged with the locking apertures such engagement will automatically and immediately occur if the seat should move forwards even if such movement is extremely rapid, e.g. in the event of the vehicle being involved in a head-on collision.

According to the present invention a vehicle seat slide pair comprises a first elongate slide member (2;102;204) adapted to be connected to the floor of the vehicle, a second elongate slide member (4;104;208) adapted to be connected to a body of the vehicle seat and in sliding relationship with the first slide member (2;102;204), one of the slide members having a trigger member (16;110;215) mounted thereon which is movable between a locked position, in which it is in engagement with at least one of a series of apertures or notches (12;106;212) in the other slide member to prevent relative sliding movement of the slide members, and an unlocked position, and a release member (24;115;228) which is movable between a locked position and an unlocked position characterised in that the trigger member (16;110;215) and the release member (24;115;228) are each urged into their locked positions and co-operate with each other, the construction and arrangement of the slide pair being such that movement of the release member (24;114;228) from the locked position to the unlocked position results in the trigger member (16;110;215) moving out of engagement with the apertures or notches (12;106;212) whilst when the release member (24;115;228) is returned to the locked position the trigger member (16;110;215) does not necessarily move to the locked position also even though urged to move towards the apertures sor notches (12;106;212).

The present invention is based on the realisation by the inventor that in the known device described above the failure of the trigger member to engage the apertures or notches in a head-on collision if the trigger member was not so engaged before the collision is due to the fact that the trigger member is coupled to move with the relatively massive release member, that is to say the handle which is provided to release the locking mechanism. The return spring acting on the trigger member must thus move not only the trigger member itself but also the release member and the relatively high inertia of the latter means that if the seat is moving rapidly as a result of a collision the trigger member is in registry with an aperture or notch for an insufficiently long period for it to engage therewith and thus "skates" rapidly over all the apertures or notches. In the construction of the present invention the release member and the trigger member are coupled together when they are moved from the locked position to the unlocked position but the release member can move back to the locked position without the trigger member necessarily following it into the locked position, for instance due to the fact that the trigger member is not in registry with at least one of the apertures or notches, and if this occurs the trigger may move subsequently into the locked position under the action of a spring as soon as it is in registry with at least one of the apertures or notches without any additional movement of the release member occurring. Thus if the trigger member should become lodged between the locked and unlocked positions it can subsequently move very rapidly indeed into the locked position if the seat should begin to move forwardly since it is effectively decoupled from the release member the inertia of which thus does not impede rapid movement of the trigger member into the locked position.

The release member may act directly on the trigger member. In this event, the trigger member, which may be pivotally connected to the first slide member, may move between the locked and unlocked positions. Thereafter, the release member may return to the locked position under the action of a return spring without the trigger member necessarily following it. The trigger member will move into the locked position only if it is in registry with at least one of the apertures or notches in the second slide member, or on the next occasion when it is so in registry, under the action of its own spring.

However, if the release member includes, as is common, a handle portion on one side of its pivotal connection for engagement by a user and an actuating portion on the other side of the pivotal connection and if the trigger member moves between the locked and unlocked positions and it is desired that the handle portion should be moved upwardly to move it into the unlocked position then a motion reversing device may be required and the slide pair may include an intermediate member pivotally connected to that slide member on which the trigger member is mounted, the two ends of the intermediate member co-operating with the actuating portion and with the trigger member via the movable member, respectively.

Typically, the first, fixed slide member constitutes an elongate channel having an open top of reduced width and the second, movable slide member is partially accommodated within the first slide member so as to be movable with respect thereto. In this event it is preferred that the apertures or notches are formed in the first slide member, preferably in the base of the channel, and that the release member and the trigger member are carried by the second slide member. Whilst it is possible that the trigger member may move linearly with respect to the second slide member it is preferred that it is pivotally connected thereto.

The precise form of the coupling between the release member or the intermediate member and the trigger member may take various forms and what is of importance is merely that when the release member is moved to the unlocked position a force is applied via the second, movable member to move the trigger member into the unlocked position but that when the release member is returned to the locked position the trigger member can move relative to it into engagement with at least one aperture or notch without simultaneous movement by the release member. In the simplest form the release member comprises a handle portion which is engaged by the user on one side of the pivot point and on the other side an actuating portion which acts directly on the trigger member or the intermediate member. This construction is well known per se in conjunction with providing the pivotal connection directly on the movable slide member. However, in the event of the vehicle being involved in a collision, the floor of the vehicle may be severely distorted thereby producing a misalignment of the fixed slide members of the slide mechanism. This misalignment coupled with the solid connection of the release member to the trigger member can resuslt in one or even both trigger members becoming disengaged precisely at that moment when it is most required and thus results in unnecessary injury to the user. Thus in a preferred embodiment of the invention the release member is pivotally connected not to the movable slide members of the slide mechanism but to a seat frame carried by the movable slide members in order to at least partially isolate the release member from deformations of the vehicle floor and the release member is connected to the trigger members or to the intermediate members by respective flexible cables, e.g. metallic cables.

Indeed, this feature is of significance and thus according to a further aspect of the present invention there is provided a vehicle seat slide mechanism including two spaced parallel slide pairs comprising respective fixed elongate slide members adapted to be connected to the floor of the vehicle and respective movable elongate slide members connected to a seat frame and in sliding relationship with the fixed slide members, each movable slide member having a trigger member mounted thereon for movement between a locked position, in which it is in engagement with at least one of a series of apertures or notches in the fixed slide member to prevent relative sliding movement of the slide members, and an unlocked position and a release member which is pivotally mounted on the seat frame and is movable between a locked position and an unlocked position, a flexible cable extending between a respective portion of the release member and the trigger members or intermediate members co-operating therewith whereby movement of the release member into the unlocked position results in movement of the trigger members into the unlocked position also.

In a simple embodiment the release member is pivotally connected to the seat frame by way of two pivotal connection members, e.g. of plastics material, which are snap or press fitted to two or more respective projections on the seat frame.

Further features and details of the invention will be apparent from the following description of four specific embodiments which are given by way of example with reference to the accompanying drawings, in which:-

Figure 1 is a side view of a slide pair forming part of a vehicle seat slide mechanism in accordance with the first embodiment of the invention;

Figure 2 is a scrap view on arrow B in Figure 1;

Figure 3 is a partial transverse cross-sectional view of the slide pair and release member of Figure 1;

Figure 4 is a side view of a slide pair forming part of a vehicle seat slide mechanism in accordance with the second embodiment of the invention, the release member and the trigger member being in the unlocked position;

Figure 5 is a view similar to Figure 4, the release member being in the locked position and the trigger member being in the unlocked position;

Figure 6 is a view similar to Figure 4, the release member and the trigger member being in the locked position;

Figure 7 is a partial side view of the front end of a slide pair forming part of a vehicle seat slide mechanism in accordance with a third embodiment of the invention:

Figure 8 is a top plan view on Arrow C of Figure 8; and

Figure 9 is a part cross-sectional view, part end view on Arrow D of Figure 8.

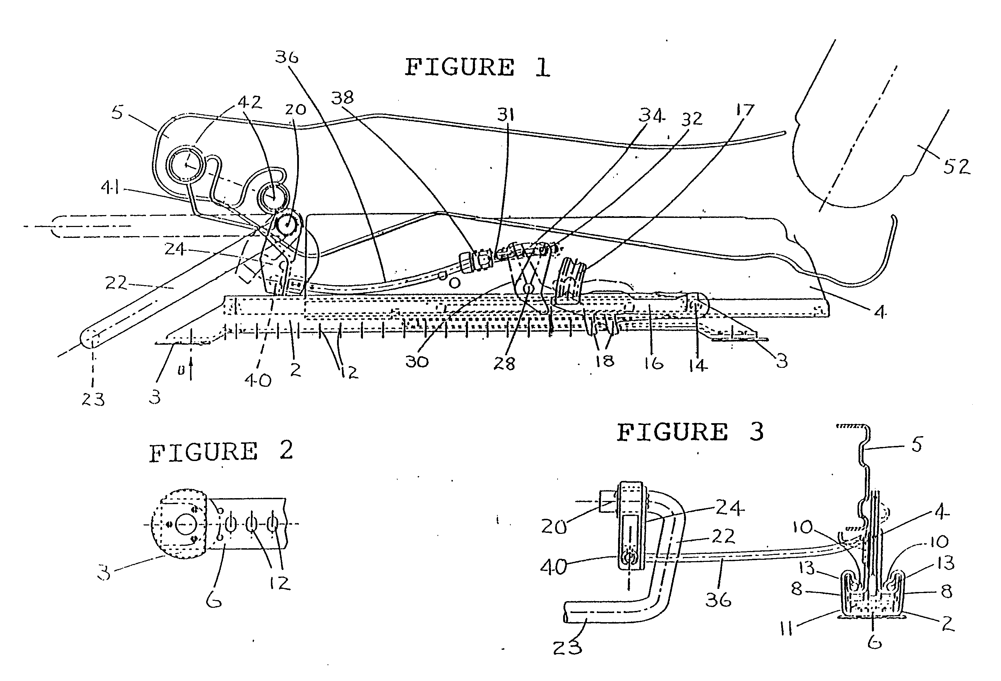

The vehicle seat slide pair of the first embodiment of the invention, shown in Figures 1, 2 and 3 comprises a fixed elongate slide 2 which, in use, is fixed to the floor of a vehicle by means of two feet 3, one at each end thereof, and an elongate movable slide 4 which, in use, is fixed to the body 5 of a vehicle seat having a squab 52. The fixed slide 2 is of generally conventional construction and is of channel shape with a base 6, two side walls 8 and two upper inwardly extending portions 10 which define a central elongate slot. The base 6 has a series of apertures 12 formed in it or notches or detents formed on it which are positioned at a regular spacing the function of which will be described below. The movable slide 4 is of generally inverted T-shape the head of which is slidably received within the fixed slide 2 and the stem of which extends upwardly through the slot defined by the portions 10 of the fixed slide. The movable slide is slidably supported within the stationary slide by rollers 11 which run between the head of the T and the base 6 of the fixed slide. The slide pair is pre-loaded to prevent rattling by ball bearings 13 which are positioned in races defined generally between the head of the T and the upper portions 10 of the fixed slide.

Situated within the fixed slide and pivotally connected to the movable slide by a pivot pin 14 which extends horizontally and at right angles to the plane of the slide, is a trigger or locking member 16 which extends forwardly from the pivot pin 14 and terminates in two downwardly and slightly rearwardly extending locking teeth 18. These teeth are spaced apart by the same distance centre to centre as the apertures 12 and normally engage into two adjacent apertures, as shown in Figure 1, to prevent relative sliding movement of the two slides. The trigger member 16 is biased downwardly into the locked position by a powerful spring 17.

Pivotally connected to the body 5 of the seat by means of a pivot pin 20 is a release member which includes a handle portion 22 extending forwardly from the pivotal axis and a short actuating portion 24 extending generally downwardly. The release member 22,24 is pivotally movable between a locked position, shown in solid lines, and an unlocked position, shown in chain lines. In practice, the handle portions 22 of the two release members will constitute the two limbs of a generally U-shaped release handle, the base limb 23 of which extends across the width of the seat so that movement of the handle causes the two release members to move simultaneously.

Pivotally connected within the movable slide 4 by means of a pivot pin 28 is a generally L-shaped intermediate member 30, one of the limbs of which co-operates with the underside of the trigger 16 and the other limb of which is connected to a metallic cable 31 by means of a peg 32 which extends out through an arcuate slot 34 in the side wall of the movable slide 4. The cable 31 is contained over most of its length within sheathing 36 which terminates at one end in a terminal block 38 located in an aperture in the movable slide 4 and terminates at the other end adjacent the actuating portion 24 of the release member. At this, other end the cable ends in a ball 40 connected to move with the actuating portion 24.

In use, if it is required to alter the longitudinal position of the seat the handle portion 22 is pulled upwards out of the locked position shown in solid lines into the unlocked position shown in chain-dotted lines. This results in clockwise rotation of the actuating portion 24 about the pivot 20 and thus in the cable 31 being drawn to the left, (see in Figure 1). This results in turn in anti-clockwise rotation of the intermediate member 30 which bears against the underside of the trigger member 16 and moves it from the illustrated locked position into the unlocked position in which the teeth 18 no longer engage with the apertures 12. The seat is now moved to the desired position and the handle portion is released whereafter it returns to the locked position under the action of a return spring (not shown) acting on it or the intermediate member 30. The trigger member 16 returns to the locked position also under the action of the spring 17 if the teeth 18 are in registry with apertures 12. However, if the teeth are not in registry with apertures they will be pressed into engagement with the base of the fixed slide between pairs of apertures. If this should occur the teeth of the trigger member 16 will generally engage in two apertures 12 under the action of the spring 17 when the seat is moved slightly forwards or backwards as a result of movement of the person sitting on it. In this event, the trigger member 16 moves independently of and relative to the intermediate member 30 under the action of its return spring 17. If the vehicle should be involved in a head-on collision before the teeth of the trigger member 16 have become engaged with the apertures 12 the seat will begin to move rapidly forwards. However, as soon as the teeth 18 are in registry with two apertures 12 the trigger member is moved extremely rapidly downwardly under the action of the spring thereby engaging the teeth with the apertures and arresting any further movement of the seat and the person seated thereon before any appreciable velocity has been attained. Due to the fact that during such downward movement the trigger member is decoupled from the intermediate member 30, and more importantly, from the release member 22,24, the mass to be moved by the spring is relatively small and by providing a spring of sufficient strength it can be ensured that the trigger member engages with apertures 12 extremely rapidly. If the vehicle should be involved in a collision the fixed slide may be subjected to deformation and if this deformation should be downwardly the spring 17 will tend to urge the trigger member 16 to follow it to minimise the risk of the two slides becoming disconnected.

As mentioned above, the release member 22,24 is pivotally connected to the body 5 of the seat and not to the movable slide, as is usual. The pivotal connection is by way of two laterally spaced connection members 41, one on each side of the seat, each of which members is snap fitted to two bosses or other protrusions 42 forming part of the seat frame. The release member is pivotally connected to the connection member 41 by inserting a pivot pin before or after snap fitting to the bosses 20. After engaging the cable end balls 40 in corresponding recesses in the actuating portions 24 the connection is complete. If the vehicle is involved in a collision the floor may become distorted and the relative vertical position of the slide pairs altered. However, due to the fact that the release member is connected to the seat frame it is partially isolated from this distortion and this fact in conjunction with the fact that the release member co-operates with the trigger members via cables which are inherently flexible and readily permit relative lateral movement means that distortion of the vehicle floor does not result in the inadvertent release of one or both trigger members.

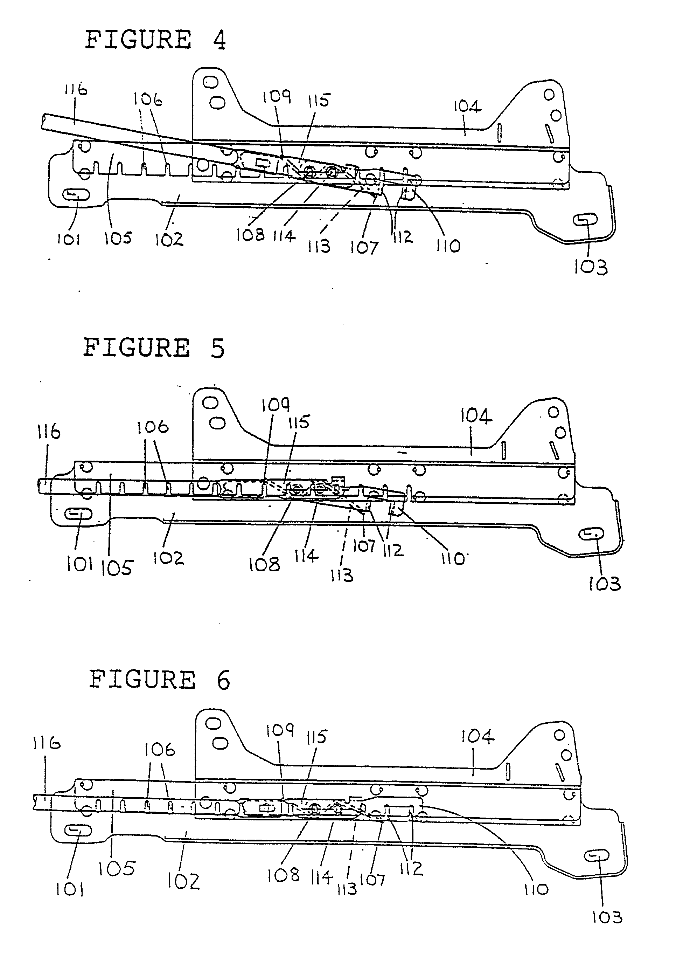

The vehicle seat slide pair of the second embodiment of the invention, shown in Figures 4, 5 and 6 comprises a fixed elongate slide 102 which, in use, is fixed to the floor of the vehicle by means of two end slots 101,103 and an elongate movable slide 104 which, in use carries the body of a seat (not shown). The particular form of slide is not relevant to this embodiment and will not be described in detail, but briefly, the movable slide 104 moves relative to the fixed slide on ball bearings (not shown) in suitable races. The fixed slide 102 has a flange 10 extending along most of the length thereof, the lower edge of the flange being formed with a plurality of regularly spaced-apart notches 106, the function of which will be described below.

Pivotally mounted on the movable slide 104 by means of a horizontal transverse, first pivot pin 108 is a trigger or locking member 110 comprising a flat rectangular plate, the plane of which is substantially vertical and generally parallel to the plane of the slide pair, and having a pair of notch-engaging teeth 112 formed by cutting and bending the metal sheet from which the trigger member is formed. These teeth 112 are spaced apart centre-to-centre by the same distance as the notches 106 and are normally engaged in two adjacent notches as shown in Figure 6, to prevent unwanted fore and aft movement of the movable slide relative to the fixed slide. The trigger member 110 is biassed upwardly into the locked position shown in Figure 6 by means of a powerful Z-shaped wire spring 113, one end 107 of which is hooked under the lower edge of the trigger member.

Pivotally connected to the trigger member by means of a second pivot pin 114, spaced apart from and generally parallel to the first pivot pin 108, is a release member 115, which comprises the flattened end of one limb 116 of a tubular U-shaped handle, the base (not shown) of which extends across the underside of the front edge of the seat, and the other limb of which is connected to the other seat slide pair at the other side of the seat. The release member 115 is pivotally movable between a locked position shown in Figures 5 and 6 and an unlocked position shown in Figure 4. The trigger member is movable between a locked position shown in Figure 6 and an unlocked position shown in Figures 4 and 5. The other end 109 of the Z-shaped spring, further from the end 107 which hooks under the trigger member, hooks over the top edge of the release member 115. The Z-shaped spring 113 is shaped so as to extend over the second pivot pin 114 and under the first pivot pin 108. A small flange 117 is formed at the end of the top edge of the release member 115 and engages the top edge of the trigger member 113 when both the release member and trigger member are in their locked positions as shown in Figure 6.

In use, if it is required to alter the longitudinal position of the seat the handle is raised against the biassing of the spring 113 thus pivotting the release member about the first pivot pin 108. The small flange 117 bears against the top edge of the trigger member 115 so that it also pivots thus moving the teeth 112 out of engagement with the notches 106. The handle, release member and trigger member are then in the unlocked positions shown in Figure 4.

The seat is then moved forwardly or rearwardly as required and the handle and release member lowered to the unlocked position. If the teeth 112 are not in registry with a pair of notches 106 in the fixed member they bear against the lower edge of the flange 105, between notches, under the influence of the spring 113. The trigger member 110 thus remains in the unlocked position. This locked position of the handle and release member and unlocked position of the trigger member is as shown in Figure 5. If this situation occurs the pair of teeth 112 in the trigger member will generally engage a pair of notches when the seat is moved slightly forwardly or backwardly as a result of movement of the person sitting on it. In this event the trigger member moves pivotably about the second pivot pin 114, independently of the release member and under the influence of the Z-shaped spring 113 to move the teeth upwardly into engagement with a pair of notches. If the vehicle should be involved in a head-on collision before the teeth on the trigger member have become engaged with a pair of notches 106 in the fixed slide, the seat will begin to move rapidly forwards. However, as soon as the teeth 112 are in registry with a pair of notches 106 the trigger member 115 is moved rapidly upwards under the influence of the spring 113 thereby engaging the teeth in the notches and arresting any further movement of the seat before any appreciable velocity has been attained. This is the position illustrated in Figure 6. Due to the fact that during such upward movement the trigger member 110 is decoupled from the release member 115 and the handle 116, the mass to be moved by the spring 113 is relatively small and by providing a spring of sufficient strength it can be ensured that the teeth engage a pair of notches extremely rapidly.

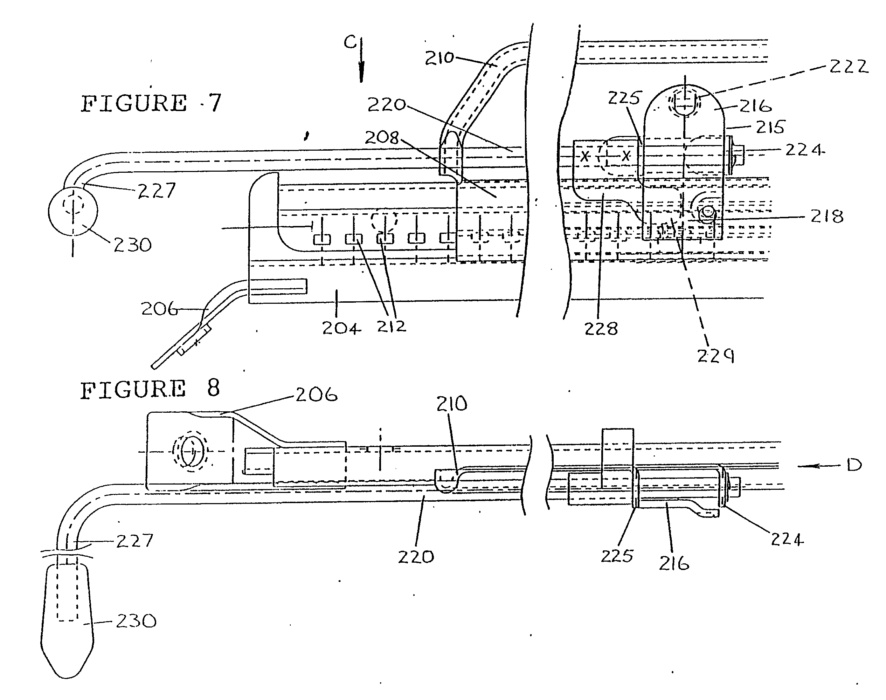

The vehicle seat slide pair of the third embodiment of the invention, shown in Figures 7, 8 and 9 comprises a fixed elongate slide 204 which, in use, is fixed to the floor of the vehicle by means of two end brackets 206 (only one shown), and an elongated movable slide 208 which, in use carries the body of the seat on an upper frame 210. The particular form of slide is not relevant to this embodiment, is not shown in the drawings and will not be described in detail, but briefly, the movable slide moves relative to the fixed slide on ball bearings (not shown) in suitable races. The fixed slide 204 has a side flange 205 extending along most of the length thereof and is provided with a plurality of rectangular apertures 212 regularly spaced-apart along the length of the flange in a straight line. The function of the apertures will be described below.

Pivotally mounted on the movable slide 208 by means of a circular cross-section shank 220 which extends generally horizontally and generally parallel to the slide is a trigger or locking member 215, comprising a metal plate and having an upper portion 216 which is generally semi-circular in the side view as shown in Figure 7, a central curved portion 217 defining a channel for receiving the shank 220 as will be described below and a lower portion 218 formed with two spaced apart teeth 219 at its lower edge. A powerful spring 222 is located between the upper portion 216 and the movable slide 208 to bias the lower portion against the flange 205 in the fixed slide and in particular to engage the teeth 219 (which pass through openings in the movable slide) in two adjacent apertures 212 in the flange 205 and thus prevent unwanted fore-and-aft movement of the movable slide relative to the fixed slide. The trigger member 215 is not fixed to the shank 220 but is capable of pivotal movement thereon, the curved portion 217 being freely engaged therewith.

The shank 220 extends part-way along the length of the slide pair generally parallel thereto and is held adjacent the trigger member on two spaced apart brackets 224 and 225 on the movable slide and at the end away from the trigger member is cranked to form a handle 227 extending approximately at right-angles to the length of the shank. The brackets are positioned one on each side of the trigger member 215 and act as locators to prevent longitudinal movement relative to the movable slide 204. The handle, carrying a gripping knob 230, is located underneath the front edge of the seat carried by the movable slide. Attached, e.g. welded, to the shank so as to rotate therewith, is a release member which is located generally alongside the trigger member and has a tongue 229 which is located between the lower portion 218 of the trigger member 215 and the movable slide 204.

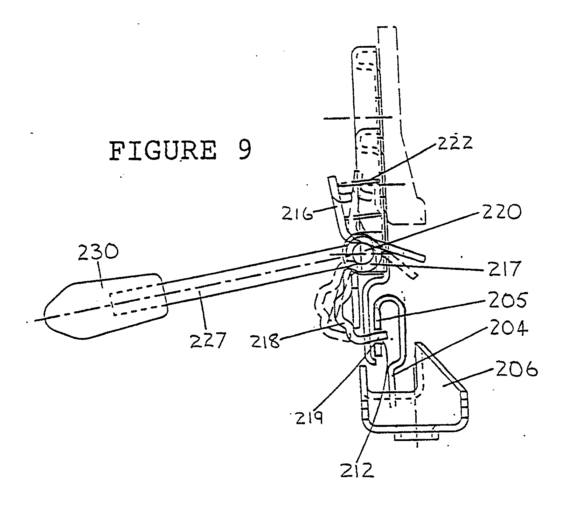

In use, when a person wishes to move the seat forwards or backwards, the person grips the knob 230 and raises the handle 227 thus rotating the shank 220 about its longitudinal axis. The release member 228 is also rotated and the tongue 229 is pressed against the adjacent side of the lower portion 218 of the trigger member 215 causing it to rotate in a clockwise direction as shown in Figure 7 against the biassing action of the spring 222 to the position shown in chain-dotted outline in Figure 9 with the teeth 219 disengaged from the apertures 212 in the flange 205 in the lower slide 204.

The seat and the movable slide 208 is then moved forwardly or rearwardly as required and the handle 227 lowered. This causes the shank 220 and the release member 228 thereon to rotate in an anti-clockwise direction as shown in Figure 9. The trigger member 215 also rotates in the same direction under the influence of the spring 222 and if the teeth 219 are in registry with a pair of apertures 212 they enter and engage them. If however, the teeth are not in registry they bear against the flange 205 at positions between the notches 212, the tongue 229 moving out of contact with the lower portion 218 of the trigger member 215 and into contact with the movable member 208 under the weight of the handle 227 and knob 230, or a return spring (not shown). When the seat is moved forwardly or backwardly as a result of movement of the person sitting thereon, the pair of teeth 219 move into registry with a pair of apertures 212 and the trigger member 215 rotates in an anti-clockwise direction about the shank 220 under the influence of the spring 222 to move the teeth 219 into engagement with the apertures 212. If the vehicle should be involved in a head-on collision before the teeth 219 of the trigger member 215 have become engaged with a pair of apertures 212 the seat will begin to move rapidly forwards. However, as soon as the teeth 219 are in registry with a pair of apertures 212 the trigger member 215 is rotated rapidly under the influence of the spring 222 thereby moving the teeth 219 into locking engagement with a pair of apertures 212 and arresting any further movement of the seat before any appreciable velocity has been attained. Due to the fact that during such rotational movement of the trigger member 215 is decoupled from the release member 228, and the shank 220 and handle 227, the mass to be moved by the spring 222 is relatively small and by providing a spring of sufficient strength it can be ensured that the teeth 219 engage a pair of apertures 212 extremely rapidly.

The upper portion 216 of the trigger member 215 as shown in the drawings may be linked by means of a cable or light rod extending transversely underneath the seat to the upper portion of a similar trigger member with associated spring located on a seat slide pair on the other side of the seat. However, the trigger member rotates on a short pivot rod between two brackets similar to brackets 224 and 225, rather than on the long shank with attached handle. No release member is provided.

In use, when the handle is raised the trigger member 215 rotates as described above, and because of the cable or rod connection, the trigger member on the other seat slide pair also rotates, thus disengaging its teeth from associated apertures. When the handle is lowered the two trigger members are then free to rotate in the opposite direction and, if each set of teeth are in registry with a pair of apertures, the two trigger members return to the locked position under the influence of their respective springs. If however, the teeth of the trigger members are not in registry with pairs of apertures, they engage the side surfaces of the flanges of the fixed slides until such time as the movable slide is moved forwardly or rearwardly by the person sitting on the seat. If the vehicle is involved in a head-on collision seat and movable slides move rapidly forwards, and as soon as the teeth on each trigger member are in registry with pairs of apertures the trigger members are rotated rapidly under the influence of the springs thereby moving the teeth into locking engagement with pairs of apertures, one pair on each slide pair, and arresting any further movement of the seat before any appreciable velocity has been attained. Due to the fact that during such rotational movements of the trigger members they are each decoupled from the release member, and the shank and handle,the mass to be moved by each spring, one on each slide pair, is relatively small, and by providing springs of sufficient strength it can be ensured that the teeth of each trigger member engage a pair of apertures extremely rapidly.

In a fourth embodiment of the invention, not illustrated, a seat slide mechanism comprises two seat slide pairs each carrying a trigger member associated with an actuating member which is mounted to rotate about a vertical axis. Connected to each actuating member is a lateral inclined lug or plate which co-operates with a ramped surface on the associated trigger such that when the actuating member is rotated the trigger is moved from the locked to the unlocked position. Projecting from each actuating member is a further lateral actuating lug. The actuating lug of a first actuating member associated with one of the slide pairs is connected to a rotary release member and the actuating lug of the first actuating member is connected by means of a cable, rod or the like to a further lug projecting from the second actuating member associated with the other slide pair. Rotation of the release member results in rotation of the first actuating member which in turn rotates the second actuating member via the cable rod or the like whereby both trigger members are unlocked simultaneously. When the release member is released it returns to the locked position under the action of its return spring and the trigger members also return to the locked position under the action of their return springs, if this is possible. However, if the teeth on the trigger members are not in registry with apertures in the fixed slide they will be rapidly returned to the locked position on the next occasion that their teeth are so in registry.

The operation of the seat slide mechanisms of all four embodiments is described if the respective teeth are not engaged in a pair of apertures and the vehicle is involved in a head-on collision. If however, another vehicle hits the vehicle having any of the seat slide mechanisms described, in the rear the movable slide will move rapidly rearwards until the teeth move into registry with a pair of apertures. The powerful spring of each mechanism will again cause the trigger member and the teeth thereon to move rapidly into the locked position with the teeth in engagement with a pair of apertures, thus arresting any further rearwards movement of the movable slides and the seat and person seated thereon.

## Claims

1. A vehicle seat slide pair comprising a first elongate slide member (2;102;204) adapted to be connected to the floor of the vehicle, a second elongate slide member (4;104;208) adapted to be connected to a body of the vehicle seat and in sliding relationship with the first slide member (2;102;204), one of the slide members having a trigger member (16;110;215) mounted thereon which is movable between a locked position, in which it is in engagement with at least one of a series of apertures or notches (12;106;212) in the other slide member to prevent relative sliding movement of the slide members, and an unlocked position, and a release member (24;115,228) which is movable between a locked position and an unlocked position characterised in that the trigger member (16;110;215) and the release member (24;115;228) are each urged into their locked positions and co-operate with each other, the construction and arrangement of the slide pair being such that movement of the release member (24;115;228) from the locked position to the unlocked position results in the trigger member (16;110;215) moving out of engagement with the apertures or notches (12;106;212) whilst when the release member (24;115;228) is returned to the locked position the trigger member (16;110;215) does not necessarily move to the locked position also even though urged to move towards the apertures or notches (12;106;212).

2. A vehicle seat slide pair according to Claim 1 characterised in that a spring (17;113;222) is provided to urge the trigger member (16;110;215) into engagement with the apertures or notches (12;106;212).

3. A vehicle seat slide pair according to either one of the preceding claims characterised in that the release member (16;110) rotates about a pivot (14;108) on the first slide member (4;104) which is generally horizontal and perpendicular to the slide pair.

4. A vehicle seat slide pair according to either one of Claims 1 or 2 characterised in that the release member (215) rotates about a pivot (220) on the first slide member (208) which is generally horizontal and parallel to the slide pair.

5. A vehicle seat slide pair according to either of Claims 1 or 2 characterised in that the release member rotates about a pivot which is generally vertical and parallel to the slide pair.

6. A vehicle seat slide pair according to any one of the preceding claims characterised in that a handle (23;116;227) is connected to the release member (16;110;215).

7. A vehicle seat slide pair according to any one of the preceding claims characterised in that an intermediate member (30) is provided by means of which the release member (24) co-operates indirectly with the trigger member (16).

8. A vehicle seat slide pair according to any one of Claims 1-6 characterised in that the release member (24) is mounted on the body of the vehicle seat (5) carried by the moving slide member (4) and is connected to the trigger member (216) via a flexible cable (36).

9. A vehicle seat slide pair according to Claim 7 characterised in that the release member (24) is mounted on the body of the vehicle seat (5) carried by the moving slide member (4) and is connected to the intermediate member (30) via a flexible cable (36).

10. A vehicle seat slide mechanism including two spaced parallel seat slide pairs comprising respective fixed elongate slide members (2) adapted to be connected to the floor of the vehicle and respective movable elongate side members (4) connected to a seat frame (5) and in sliding relationship with the fixed slide members (2), each movable slide member (4) having a trigger member (16) mounted thereon for movement between a locked position, in which it is in engagement with at least one of a series of apertures or notches (12) in the fixed slide member (2) to prevent relative sliding movement of the slide members (2,4), and an unlocked position, characterised in that there is provided a release member (24) which is pivotally mounted on the seat frame (5) and is movable between a locked position and an unlocked position and a flexible cable (36) extending between a respective portion of the release member (24) and the trigger members (16) whereby movement of the release member (24) into the unlocked position results in movement of the trigger members (16) into the unlocked position also.

11. A vehicle seat slide mechanism according to Claim 10 characterised in that the flexible cable (36) extends between a respective portion of the release member (24) and intermediate members (30) co-operating with the trigger members (16).

# FIGURE 1

# FIGURE 2

# FIGURE 3

EP 0 411 842 A2

FIGURE 4

FIGURE 5

FIGURE 6

FIGURE 7

FIGURE 8

EP 0 411 842 A2

FIGURE 9